# EUROPEAN PATENT APPLICATION

(11) **EP 3 952 390 A1**
(43) Date of publication of application: **09.02.2022**
(21) Application number: 19921291.1
(22) Date of filing: 09.12.2019
(51) Int. Cl.: H04W 16/28, H04B 7/06, H04W 74/08

(54) **TERMINAL DEVICE THAT PERFORMS BEAM SELECTION IN RANDOM ACCESS PROCEDURE, BASE STATION DEVICE, COMMUNICATION METHOD, AND PROGRAM**

(30) Priority: 28.03.2019 JP 2019063024
(71) Applicant: KDDI Corporation, Tokyo 163-8003 (JP)
(72) Inventor: UMEHARA, Masahito, Fujimino-shi, Saitama 356-8502 (JP); KANNO, Issei, Fujimino-shi, Saitama 356-8502 (JP); OHSEKI, Takeo, Fujimino-shi, Saitama 356-8502 (JP); SUEGARA, Yasuhiro, Fujimino-shi, Saitama 356-8502 (JP)
(74) Representative: Pitchford, James Edward
(86) International application number: PCT/JP2019/048131
(87) International publication number: WO 2020/194895

(57) **Abstract**

A terminal apparatus transmits message 1 of a 4-step random access procedure using information of a first beam among a plurality of beams formed by a base station apparatus in order to connect to the base station apparatus, receives, from the base station apparatus, message 2 of the random access procedure as a response to the message 1, and transmits, in response to the message 2, message 3 of the random access procedure including information of a second beam as a beam serving a candidate for switching from the first beam based on radio qualities measured for the plurality of beams after transmitting the message 1.

## Description

### TECHNICAL FIELD

The present invention relates to a terminal apparatus, a base station apparatus, a communication method, and a program and, more particularly, to a beam selection technique in a random access procedure.

### BACKGROUND ART

The standards (4th generation (4G) LTE standard and 5th generation (5G) NR (New Radio) standard) by the 3rd partnership project define a random access procedure as a procedure for establishing a connection between a base station apparatus and a terminal apparatus. The random access procedure is used, for example, at the time of an initial connection between a base station apparatus and a terminal apparatus, or when a terminal apparatus connects to a base station apparatus at a handover destination at the time of handover. The random access procedure includes 4-step RACH (Random Access CHannel). In 4-step RACH, first, a terminal apparatus transmits a random access preamble (message 1) to a base station apparatus, and the base station apparatus transmits a random access response (message 2) to the terminal apparatus in response to the random access preamble. Then, the terminal apparatus transmits a RRC (Radio Resource Control) connection request (message 3) to the base station apparatus, and the base station apparatus transmits a RRC connection setup message (message 4) to the terminal apparatus. In 4-step RACH, after transmitting and receiving these four messages, a connection between the base station apparatus and the terminal apparatus is established.

In 5G, a base station apparatus and a terminal apparatus can perform high-quality communication by performing beam forming using a plurality of antenna elements. At this time, the base station apparatus can provide a communication service parallelly using a plurality of beams. For a plurality of beams formed by the base station apparatus, SS (Synchronization Signal)/PBCH (Physical Broadcast CHannel) different between beams can be used. The terminal apparatus can measure a radio quality distinctively for the respective beams, receive a signal from a specific beam, and transmit a signal with respect to the beam.

In the random access procedure when a base station forms a plurality of beams, a combination (pair) of one of the beams and one of beams settable by a terminal apparatus is specified, and the above-described 4-step procedure starts using the specified beam pair. In an example, the terminal apparatus can receive a signal transmitted from the base station apparatus while the base station apparatus switches the plurality of settable beams, measure a radio quality, and transmit message 1 using a beam pair that exceeds first the threshold of a minimum radio quality (see NPTL 1). In another example, the terminal apparatus can transmit message 1 using a beam pair corresponding to a highest radio quality among radio qualities measured for all possible beam pairs (see NPTL 1).

### CITATION LIST

### NON-PATENT LITERATURE

NPTL 1: 3GPP Contribution, R1-1813443, November 2018

### SUMMARY OF INVENTION

### TECHNICAL PROBLEM

When the terminal apparatus moves, a beam suited to communication with the terminal apparatus out of a plurality of beams formed by the base station apparatus may vary. During the random access procedure, the beam suited to communication may change, processing to switch the beam may become necessary after the completion of the random access procedure, and the time until data communication starts may become long, decreasing the communication efficiency.

### SOLUTION TO PROBLEM

The present invention provides a technique capable of efficiently executing the random access procedure and beam selection.

According to one aspect of the present invention, there is provided a terminal apparatus configured to transmit message 1 of a 4-step random access procedure using information of a first beam among a plurality of beams formed by a base station apparatus in order to connect to the base station apparatus, receive, from the base station apparatus, message 2 of the random access procedure as a response to the message 1, and transmit, in response to the message 2, message 3 of the random access procedure including information of a second beam as a beam serving a candidate for switching from the first beam based on radio qualities measured for the plurality of beams after transmitting the message 1.

According to one aspect of the present invention, there is provided a base station apparatus configured to form a plurality of beams, receive, from a terminal apparatus, message 1 of a 4-step random access procedure transmitted using information of a first beam among the plurality of beams, transmit message 2 of the random access procedure using the first beam in response to the message 1, receive message 3 of the random access procedure that is transmitted from the terminal apparatus in response to the message 2 and includes information of a second beam as a beam serving as a candidate for switching from the first beam, and transmit message 4 of the random access procedure using one of the first beam and the second beam in response to the message 3.

### ADVANTAGEOUS EFFECTS OF INVENTION

According to the present invention, the random access procedure and beam selection can be efficiently executed.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication network;
Fig. 2 is a block diagram showing an example of the hardware arrangements of a base station apparatus and terminal apparatus;
Fig. 3 is a block diagram showing an example of the functional arrangement of the base station apparatus;
Fig. 4 is a block diagram showing an example of the functional arrangement of the terminal apparatus; and
Fig. 5 is a ladder chart showing an example of the sequence of processing executed by the wireless communication network.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (Network Configuration)

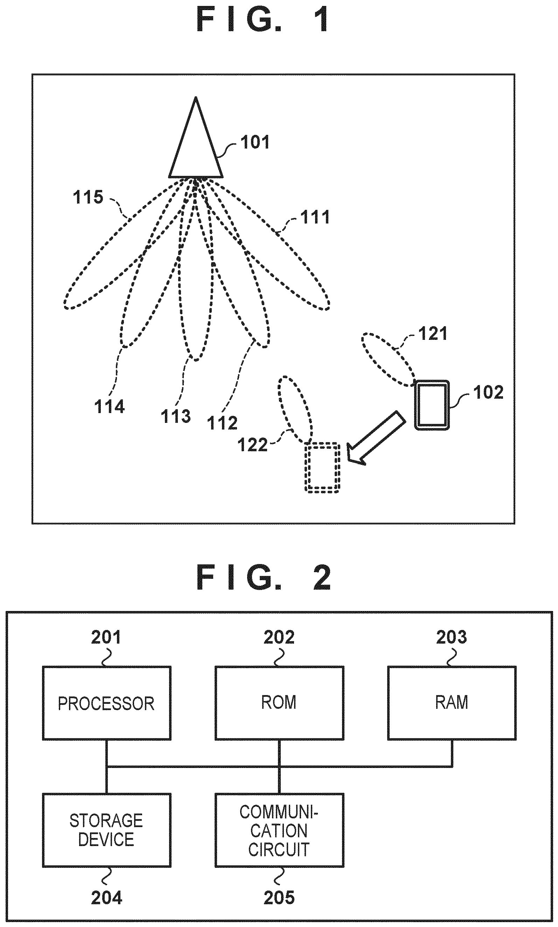

Fig. 1 shows an example of the configuration of a wireless communication network according to an embodiment. In an example, the wireless communication network according to the embodiment includes a base station apparatus 101, and a terminal apparatus 102 capable of connecting to the base station apparatus 101 and communicating with it. The base station apparatus 101 can form a plurality of beams 111 to 115. Note that different synchronization signals (SS)/physical broadcast channels (PBCH) are transmitted by the respective beams 111 to 115. The terminal apparatus 102 can communicate via a specific beam using identification information (ID) of received SS/PBCH. That is, the terminal apparatus 102 need not specify a direction in which the base station apparatus 101 forms the beam, and can use a plurality of beams distinctively by the ID of SS/PBCH. Note that Fig. 1 shows one base station apparatus 101 and one terminal apparatus 102, but many base station apparatuses and many terminal apparatuses can exist without losing universality.

The terminal apparatus 102 can establish a connection to the base station apparatus 101 and communicate with it using a beam pair of one of the beams 111 to 115 and one of a plurality of beam patterns formable by the terminal apparatus 102 itself. Before establishing a connection to the base station apparatus 101, the terminal apparatus 102 measures the radio quality of SS/PBCH corresponding to each of the beams for the beams 111 to 115 formed by the base station apparatus 101. At this time, the terminal apparatus 102 can specify one of beam patterns formable by the terminal apparatus 102 that can provide a highest radio quality. For example, for each of beam patterns formable by the terminal apparatus 102, the terminal apparatus 102 specifies a radio quality obtained when receiving signals (SS/PBCH) transmitted from the base station apparatus 101 while the base station apparatus 101 switches the settable beams 111 to 115. The terminal apparatus 102 specifies, as a beam pair, a beam corresponding to a signal determined to exceed the threshold of a minimum radio quality first after, for example, the start of a connection to the base station apparatus 101 is decided, and a beam pattern that is formed by the terminal apparatus 102 and used to receive the signal. The terminal apparatus 102 may specify a beam pair corresponding to a highest radio quality among radio qualities specified for all combinations of the beams 111 to 115 formed by the base station apparatus 101 and beam patterns formable by the terminal apparatus 102. In an example, the terminal apparatus 102 can specify, as a beam pair for establishing a connection to the base station apparatus 101, a pair of the beam 111 formed by the base station apparatus 101 and a beam 121 out of beam patterns formable by the terminal apparatus 102.

The terminal apparatus 102 transmits message 1 (random access preamble) of the random access procedure for establishing a connection to the base station apparatus 101 by using the beam 121 and the ID of SS/PBCH used in the beam 111 based on the specified beam pair. Note that the connection establishment processing is performed when, for example, the terminal apparatus 102 shifts from a standby state (for example, RRC_Idle state) to a connection state (RRC_Connected state) or when it switches the connection from another base station apparatus to the base station apparatus 101 by handover.

At this time, the range of coverage of a beam formed by the base station is considered to be narrow, and a beam pair of a high communication quality may change when the terminal apparatus 102 moves after transmitting message 1. For example, when the terminal apparatus 102 moves, the radio quality of a pair of the beam 112 and a beam 122 may become higher than that of the pair of the beams 111 and 121. When the beam pair of the beams 111 and 121 is a beam pair specified as a result of determining that it has exceeded first the threshold of a minimum radio quality, the radio quality of the pair of the beams 112 and 122 may be higher than that of the radio quality of the pair of the beams 111 and 121 even if the terminal apparatus 102 does not move. In such a case, the beam pair used is switched to the pair of beams 112 and 122, and the communication between the base station apparatus 101 and the terminal apparatus 102 can be executed at higher quality. However, if the processing of switching the beam pair is executed after the end of the random access procedure, the time until data communication starts may become long, decreasing the efficiency of the overall network.

The embodiment provides a procedure for suppressing the decrease in efficiency. More specifically, to connect to the base station apparatus 101, the terminal apparatus 102 transmits message 1 (random access preamble) of the random access procedure using information (information (ID) of SS/PBCH of the first beam) of the first beam formed by the base station apparatus 101 out of the first beam pair specified in the above-described way. The terminal apparatus 102 receives message 2 (random access response) of the random access procedure as a response to message 1, and even after transmitting message 1, keeps measuring the radio quality. For example, if the terminal apparatus 102 determines that the beam pair is different from the first beam pair used to transmit message 1 and the second beam pair corresponding to the second beam different from the first beam is higher in radio quality, it specifies the second beam as a candidate for the beam switching destination from the first beam. In actual, the terminal apparatus 102 can specify not a beam but the ID of SS/PBCH used. If the second beam different in the ID of SS/PBCH from the first beam exists as a candidate for the beam switching destination, the terminal apparatus 102 transmits message 3 (RRC Connection Request) of the random access procedure including information corresponding to the second beam such as the ID of SS/PBCH of the second beam. At this time, a plurality of second beams may exist. For example, in measurement after transmitting message 1, the terminal apparatus 102 can detect a plurality of beam pairs higher in radio quality than the beam pair that uses the first beam. In this case, the terminal apparatus 102 can transmit message 3 including the ID of SS/PBCH used in a beam on the base station apparatus 101 side out of each of the detected beam pairs. Note that message 3 is transmitted using a beam pair similar to that of message 1. After that, the terminal apparatus 102 waits for receiving message 4 (RRC Connection Setup) of the random access procedure from the base station apparatus 101 by the beam pattern of the terminal apparatus 102 in a beam pair serving as a candidate for the switching destination. When the base station apparatus 101 transmits message 4 using the second beam based on information obtained by analyzing message 3, the terminal apparatus 102 can receive message 4. Note that the terminal apparatus 102 may wait for message 4 using the beam pattern of the terminal apparatus 102 in a beam pair before switching. That is, the terminal apparatus 102 may wait for message 4 using only the beam pattern of the terminal apparatus 102 in a beam pair serving as a candidate for the switching destination and in addition, wait for message 4 using the beam pattern of the terminal apparatus 102 in a beam pair before switching. For example, when it is defined that the base station apparatus 101 transmits message 4 using the second beam corresponding to a beam pair serving as a candidate for the switching destination, the terminal apparatus 102 suffices to wait for message 4 by a beam pattern corresponding to the beam pair serving as a candidate for the switching destination. In contrast, when it is defined that the base station apparatus 101 selects which of the second beam corresponding to a beam pair serving as a candidate for the switching destination and the first beam corresponding to a beam pair before switching is used, the terminal apparatus 102 cannot recognize in advance which of the first and second beams is used to transmit message 4. Thus, the terminal apparatus 102 waits for message 4 by beam patterns respectively corresponding to the beam pair serving as a candidate for the switching destination and the beam pair before switching. When a plurality of beam pairs exist as candidates for the switching destination, the terminal apparatus 102 waits for message 4 using beam patterns of the terminal apparatus 102 in the respective beam pairs.

The base station apparatus 101 according to the embodiment receives, from the terminal apparatus 102, message 1 of the random access procedure transmitted using the ID of SS/PBCH of the first beam among beams formed by the base station apparatus 101. In response to message 1, the base station apparatus 101 transmits message 2 of the random access procedure to the terminal apparatus 102 by the first beam. Then, the base station apparatus 101 receives message 3 of the random access procedure transmitted using the ID of SS/PBCH of the first beam. Message 3 includes information representing information (ID of SS/PBCH of the second beam) of the second beam serving as a candidate for the beam switching destination specified by the terminal apparatus 102. In response to message 3, the base station apparatus 101 transmits message 4 to the terminal apparatus 102. At this time, when the base station apparatus 101 determines whether to switch the beam or is to switch the beam, and is notified of information of a plurality of second beams, it decides a beam to be used. Then, the base station apparatus 101 transmits message 4 using the decided beam.

In this manner, a beam pair used in the stage of message 4 can be switched. A beam pair need not be switched after establishment of a connection, and data communication can start quickly.

Note that the base station apparatus 101 may transmit message 4 in a plurality of (in some cases, all) beams included in the first and second beams. In this case, the terminal apparatus 102 can determine a beam from which message 4 has been received at high communication quality. The terminal apparatus 102 can transmit a connection completion message after message 4, including the ID (for example, ID of SS/PBCH) of a beam on the transmission source of message 4 received at high communication quality. The ID of the transmitted beam can be the ID of a beam having a highest reception quality of message 4, but a beam may be selected based on another criterion such as the ID of a beam for which there is plenty of room for improvement of the reception quality. In this case, a beam suited to a state immediately before data communication is selected, and data communication can be executed stably after establishment of a connection.

Next, the arrangements of the base station apparatus and terminal apparatus that execute the above-described processing, and the sequence of the processing will be exemplified.

### (Apparatus Arrangement)

Fig. 2 shows an example of the hardware arrangements of the base station apparatus and terminal apparatus according to the embodiment. In an example, the base station apparatus and the terminal apparatus include a processor 201, a ROM 202, a RAM 203, a storage device 204, and a communication circuit 205. The processor 201 is a computer including one or more processing circuits such as a general-purpose CPU (Central Processing Unit) and ASIC (Application-Specific Integrated Circuit). The processor 201 executes processing of the whole apparatus and the above-described processing by reading out and executing a program stored in the ROM 202 or the storage device 204. The ROM 202 is a read-only memory that stores programs regarding processing executed by the apparatus and information such as various parameters. The RAM 203 is a random access memory that functions as a work space when the processor 201 executes a program, and stores temporal information. The storage device 204 is constituted by, for example, a removable external storage device or the like. The communication circuit 205 is constituted by, for example, a circuit for wired communication or wireless communication. The base station apparatus can include, for example, a wired communication circuit for communicating with another base station apparatus, and a wireless communication circuit for communicating with a terminal apparatus. The terminal apparatus includes a wireless communication circuit for communicating with a base station apparatus. Although Fig. 2 shows one communication circuit 205, the base station apparatus and the terminal apparatus can include a plurality of communication circuits. For example, the terminal apparatus can further include a communication circuit for communication by a wireless LAN, Bluetooth^{®}, or the like.

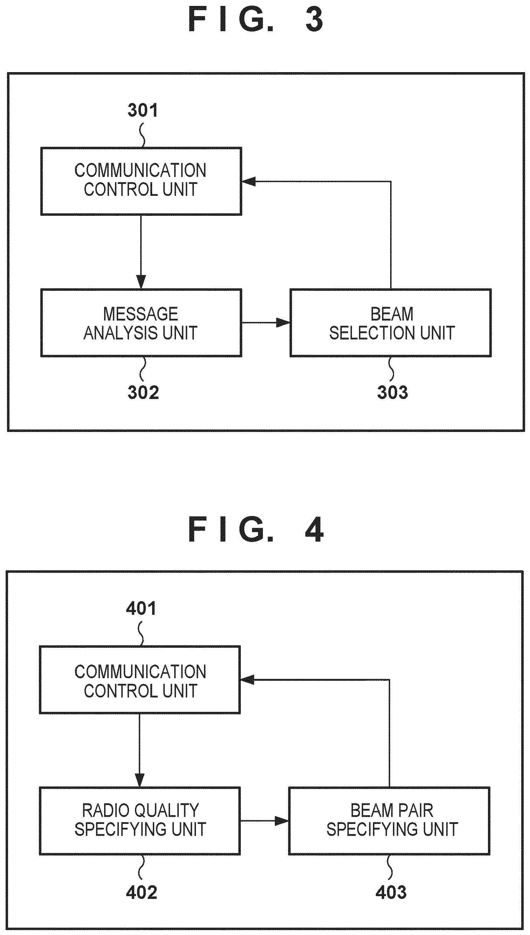

Fig. 3 is a block diagram showing an example of the functional arrangement of the base station apparatus. In an example, the base station apparatus includes a communication control unit 301, a message analysis unit 302, and a beam selection unit 303. The communication control unit 301 controls, for example, wireless communication with the terminal apparatus. In an example, the communication control unit 301 operates in accordance with the NR standard and can execute the above-described random access procedure. The communication control unit 301 is configured to form a plurality of beams, and transmits different SS/PBCH in the respective beams. The message analysis unit 302 analyzes a message received from the terminal apparatus. The message analysis unit 302 analyzes message 3 of the random access procedure transmitted from the terminal apparatus, determines whether message 3 includes information of a candidate for the beam switching destination, and if message 3 includes the information, specifies the candidate for the beam switching destination. The beam selection unit 303 selects which of a beam used to transmit message 2 of the random access procedure and a beam serving as a candidate for the switching destination notified by message 3 is used. The beam selection unit 303 may select a plurality of beams from beams used to transmit message 2 and beams serving as candidates for the switching destination notified by message 3. The beam selection unit 303 outputs an instruction to the communication control unit 301 to transmit message 4 of the random access procedure using the selected beam.

Fig. 4 is a block diagram showing an example of the functional arrangement of the terminal apparatus. In an example, the terminal apparatus includes a communication control unit 401, a radio quality specifying unit 402, and a beam pair specifying unit 403. The communication control unit 401 controls, for example, wireless communication with the base station apparatus. In an example, the communication control unit 401 operates in accordance with the NR standard and can execute the above-described random access procedure. The communication control unit 401 can form a plurality of beam patterns and communicate using one of the beam patterns. The radio quality specifying unit 402 receives a radio signal (for example, SS/PBCH) transmitted from each beam formed by the base station apparatus, and specifies a radio quality. For a radio signal transmitted from each beam, the radio quality specifying unit 402 specifies a radio quality when each of beam patterns formable by the communication control unit 401 is used. The beam pair specifying unit 403 specifies a beam pair used for communication based on the radio quality specified by the radio quality specifying unit 402. For example, the radio quality specifying unit 402 specifies a radio quality in a predetermined order for a plurality of beam pairs, and the beam pair specifying unit 403 specifies, as a beam pair initially used in the random access procedure for a connection to the base station apparatus, a beam pair whose specified radio quality exceeds a predetermined threshold first. The beam pair specifying unit 403 specifies, as a beam pair initially used in the random access procedure for a connection to the base station apparatus, a beam pair corresponding to a highest radio quality exceeding a predetermined threshold out of radio qualities specified by the radio quality specifying unit 402 for all beam pairs. The beam pair specifying unit 403 notifies the communication control unit 401 of the specified beam pair initially used in the random access procedure. The communication control unit 401 transmits message 1 of the random access procedure by a beam pattern formed by the terminal apparatus using the ID of SS/PBCH corresponding to a beam formed by the base station apparatus out of the notified beam pair.

Note that the radio quality specifying unit 402 keeps specifying a radio quality even after transmitting message 1, and the beam pair specifying unit 403 keeps specifying a beam pair of a high radio quality based on the specified radio quality. For example, the beam pair specifying unit 403 specifies, as a beam pair serving as a candidate for the switching destination, a beam pair that is different from a beam pair used to transmit message 1 and has a radio quality exceeding a predetermined threshold. For example, the beam pair specifying unit 403 can specify, as a beam pair serving as a candidate for the switching destination, a beam pair of a radio quality higher than a radio quality specified for a beam pair used to transmit message 1. Note that the beam pair specifying unit 403 may specify a plurality of beam pairs as candidates for the switching destination. As described above, the beam pair specifying unit 403 notifies the communication control unit 401 of the specified beam pair. In response to reception of message 2 as a response to message 1, the communication control unit 401 transmits, to the base station apparatus, message 3 of the random access procedure including information (for example, ID of SS/PBCH) of a beam formed in the base station apparatus out of the notified beam pair. The communication control unit 401 transmits message 3 using information (ID of SS/PBCH) of the beam formed by the base station apparatus in the same beam pair as that used to transmit message 1, and by a beam pattern formed by the terminal apparatus 102 in the beam pair. Then, the communication control unit 401 waits for message 4 of the random access procedure transmitted from the base station apparatus by a beam pattern corresponding to the beam pair serving as a candidate for the switching destination notified by message 3. When a plurality of beam pairs exist as candidates for the switching destination, the communication control unit 401 waits for message 4 by the plurality of beam patterns. In addition, the communication control unit 401 may wait for message 4 by a beam pattern corresponding to a beam pair used to transmit message 1.

In response to reception of message 4, the communication control unit 401 specifies, based on the beam pattern by which message 4 has been received, a beam pair used for subsequent data communication. Note that the base station apparatus may transmit message 4 including information representing a beam by which message 4 has been transmitted. In this case, the communication control unit 401 may confirm the contents of message 4, specify a beam by which message 4 has been transmitted, specify a beam pair corresponding to the beam, and specify a beam pair used for subsequent data communication. In response to message 4, the communication control unit 401 can transmit a message representing the completion of the connection by using a beam pattern that corresponds to the specified beam pair and is formed by the terminal apparatus. When the base station apparatus transmits message 4 using a plurality of beams, the communication control unit 401 can select, based on the reception quality of message 4, a beam pair used for subsequent data communication. In this case, the communication control unit 401 can transmit, to the base station apparatus using a beam pattern that corresponds to the selected beam pair and is formed by the terminal apparatus, a message representing the completion of the connection, including information of a beam that corresponds to the beam pair and is formed by the base station apparatus.

### (Processing Sequence)

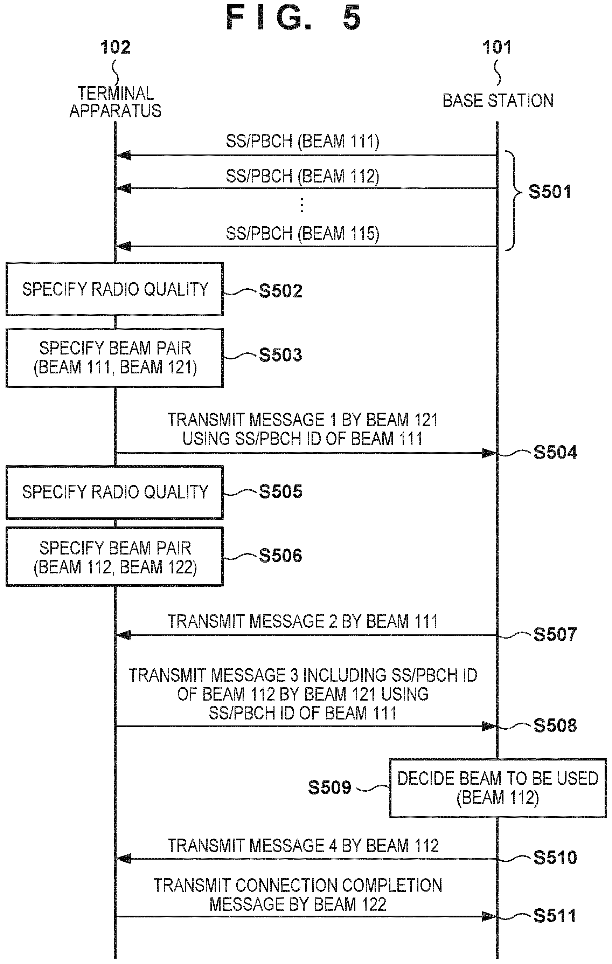

An example of the sequence of a communication method executed by the wireless communication network according to the embodiment will be described with reference to Fig. 5. An example of the sequence of processing when the terminal apparatus 102 establishes a connection to the base station apparatus 101 in a state as shown in Fig. 1 will be explained.

First, the base station apparatus 101 periodically transmits the synchronization signal (SS)/physical broadcast channel (PBCH) via the respective beams 111 to 115 formed by the base station apparatus 101 (step S501). The terminal apparatus 102 receives SS/PBCH using a beam pattern formable by the terminal apparatus 102, and specifies a radio quality corresponding to a plurality of beam pairs formed from beams formed by the base station apparatus 101 and the beams formed by the terminal apparatus 102 (step S502). Based on the specified radio quality, the terminal apparatus 102 specifies a beam pair used when transmitting message 1 of the random access procedure to the base station apparatus 101 (step S503). The beam pair specifying method has already been described above and a description thereof will not be repeated. Assume that a beam pair of the beams 111 and 121 is specified as a beam pair for transmitting message 1. Note that the terminal apparatus 102 need not recognize a beam itself formed by the base station apparatus 101, and suffices to specify in the above-described manner the ID of SS/PBCH corresponding to a beam whose radio quality exceeds a predetermined threshold, and a beam pattern used by the terminal apparatus 102 at that time. Then, the terminal apparatus 102 transmits message 1 to the base station apparatus 101 by the beam 121 using the ID of SS/PBCH of the beam 111 in accordance with the specified beam pair (step S504).

The base station apparatus 101 receives message 1 via the beam 111, and transmits message 2 via the beam 111 in response to message 1 (step S507). Even after transmitting message 1, the terminal apparatus 102 keeps specifying a radio quality and specifying a beam pair (steps S505 and S506). The terminal apparatus 102 specifies, for example, a beam pair that can provide a radio quality higher than the radio quality provided by the beam pair specified in step S503. For example, when the terminal apparatus 102 moves, and the radio quality of a beam pair of the beams 112 and 122 becomes higher than that of the beam pair specified in step S503, the terminal apparatus 102 specifies the beam pair of the beams 112 and 122 as a beam pair serving as a candidate for the switching destination. When the terminal apparatus 102 specifies the beam pair serving as a candidate for the switching destination, it transmits, to the base station apparatus 101 in response to message 2, message 3 including the information (ID of SS/PBCH) about the beam 112 formed by the base station apparatus 101 out of the beam pair serving as a candidate for the switching destination (step S508). Note that message 3 is transmitted via the beam 121 using the ID of SS/PBCH of the beam 111, similar to message 1. When a beam pair serving as a candidate for the switching destination does not exist, the terminal apparatus 102 transmits message 3 to the base station apparatus 101 without including information of a beam. Upon receiving message 3, the base station apparatus 101 analyzes message 3 and determines whether a beam pair exists as a candidate for the switching destination. If a beam pair exists as a candidate for the switching destination, the base station apparatus 101 extracts information of a beam included in message 3 and decides which of the beam and the currently used beam is used for subsequent communication (step S509). For example, when the base station apparatus 101 receives message 3 including information of the beam 112, it decides which of the currently used beam 111 and the beam 112 notified by message 3 is used. Assume that the base station apparatus 101 decides to use the beam 112. The base station apparatus 101 transmits, as a response to message 3, message 4 using the beam 112 decided to be used (step S510). At this time, the terminal apparatus 102 waits for message 4 using a beam pattern (beam 121) corresponding to the beam pair used when message 1 is transmitted, and a beam pattern (beam 122) in a beam pair serving as a candidate for the switching destination. Regardless of which of the beams 111 and 112 is used to transmit message 4 from the base station apparatus 101, the terminal apparatus 102 can receive message 4. Depending on which of the beams 121 and 122 is used to receive message 4, the terminal apparatus 102 determines which of the beam pair before switching and the beam pair serving as a candidate for the switching destination is used to perform subsequent data communication. The terminal apparatus 102 transmits a connection completion message to the base station apparatus 101 using the beam used when message 4 is received (step S511). After that, a connection between the terminal apparatus 102 and the base station apparatus 101 is established, and data communication is performed subsequently.

In this manner, for example, when the terminal apparatus 102 moves during the random access procedure, a beam pair used can be switched during the procedure. Processing for changing a beam pair need not be executed immediately after establishment of a connection. Data communication can therefore be executed immediately after establishment of a connection, increasing the communication efficiency of the overall network.

Note that it is also possible that the terminal apparatus 102 transmits message 3 without including information of a candidate for the switching destination, and the base station apparatus 101 receives message 3 by each beam and selects a beam to be used based on the reception quality of message 3. In this case, the base station apparatus 101 transmits message 4 by the selected beam, and the terminal apparatus 102 waits for message 4 by all beam patterns formable by the terminal apparatus 102. The terminal apparatus 102 may specify, as a beam pair used for subsequent data communication, a beam pair of the beam selected by the base station apparatus 101 and a beam formed by the terminal apparatus 102 by which message 4 has been received at high quality. Although the terminal apparatus 102 transmits message 3 using the ID of SS/PBCH of a beam before switching, it may use, as the beam of the terminal apparatus 102 used at that time, not only the beam before switching but also a beam serving as a candidate for the switching destination. In this case, message 3 need not include information of a beam, and the beam can be switched during the random access procedure using a message configuration similar to a conventional one. Accordingly, a beam pair need not be switched after establishment of a connection, and data communication can start quickly.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2019-063024 filed March 28, 2019, which is hereby incorporated by reference herein.

## Claims

1. A terminal apparatus configured to:
transmit message 1 of a 4-step random access procedure using information of a first beam among a plurality of beams formed by a base station apparatus in order to connect to the base station apparatus;
receive, from the base station apparatus, message 2 of the random access procedure as a response to the message 1; and
transmit, in response to the message 2, message 3 of the random access procedure including information of a second beam as a beam serving a candidate for switching from the first beam based on radio qualities measured for the plurality of beams after transmitting the message 1.

2. The terminal apparatus according to claim 1, wherein different SSs (Synchronization Signals)/PBCHs (Physical Broadcast CHannels) are used in the plurality of beams,
the information of the first beam is information representing SS/PBCH used in the first beam, and
the information of the second beam is information representing SS/PBCH used in the second beam.

3. The terminal apparatus according to claim 1 or 2, wherein the terminal apparatus is configured to measure the radio qualities for the plurality of beams in a predetermined order, and use, as the information of the first beam, SS/PBCH used in a beam first determined to have the radio quality exceeding a predetermined threshold.

4. The terminal apparatus according to claim 1 or 2, wherein the terminal apparatus is configured to measure the radio qualities for the plurality of beams, and use, as the information of the first beam, SS/PBCH used in a beam whose radio quality exceeds a predetermined radio quality and is highest.

5. The terminal apparatus according to any one of claims 1 to 4, wherein the message 3 is transmitted including the information of a plurality of the second beams.

6. The terminal apparatus according to any one of claims 1 to 5, wherein the terminal apparatus is configured to wait for message 4 of the random access procedure as a response to the message 3 using a beam pattern corresponding to the second beam.

7. The terminal apparatus according to claim 6, wherein the terminal apparatus is configured to wait for the message 4 using a beam pattern corresponding to the first beam.

8. The terminal apparatus according to any one of claims 1 to 7, wherein information of a beam higher in radio quality measured after transmitting the message 1 than the first beam is used as the information of the second beam.

9. A base station apparatus configured to:
form a plurality of beams;
receive, from a terminal apparatus, message 1 of a 4-step random access procedure transmitted using information of a first beam among the plurality of beams;
transmit message 2 of the random access procedure using the first beam in response to the message 1;
receive message 3 of the random access procedure that is transmitted from the terminal apparatus in response to the message 2 and includes information of a second beam as a beam serving as a candidate for switching from the first beam; and
transmit message 4 of the random access procedure using one of the first beam and the second beam in response to the message 3.

10. The base station apparatus according to claim 9, wherein the base station apparatus is configured to select, from the first beam and the second beam, a third beam used when transmitting the message 4.

11. The base station apparatus according to claim 10, wherein the base station apparatus is configured to select a plurality of the third beams and transmit the message 4 using the plurality of selected third beams.

12. A communication method executed by a terminal apparatus, comprising:
transmitting message 1 of a 4-step random access procedure using information of a first beam among a plurality of beams formed by a base station apparatus in order to connect to the base station apparatus;
receiving, from the base station apparatus, message 2 of the random access procedure as a response to the message 1; and
transmitting, in response to the message 2, message 3 of the random access procedure including information of a second beam as a beam serving a candidate for switching from the first beam based on radio qualities measured for the plurality of beams after transmitting the message 1.

13. A communication method executed by a base station apparatus, comprising:
forming a plurality of beams;
receiving, from a terminal apparatus, message 1 of a 4-step random access procedure transmitted using information of a first beam among the plurality of beams;
transmitting message 2 of the random access procedure using the first beam in response to the message 1;
receiving message 3 of the random access procedure that is transmitted from the terminal apparatus in response to the message 2 and includes information of a second beam as a beam serving as a candidate for switching from the first beam; and
transmitting message 4 of the random access procedure using one of the first beam and the second beam in response to the message 3.

14. A program for causing a computer of a terminal apparatus to:
transmit message 1 of a 4-step random access procedure using information of a first beam among a plurality of beams formed by a base station apparatus in order to connect to the base station apparatus;
receive, from the base station apparatus, message 2 of the random access procedure as a response to the message 1; and
transmit, in response to the message 2, message 3 of the random access procedure including information of a second beam as a beam serving a candidate for switching from the first beam based on radio qualities measured for the plurality of beams after transmitting the message 1.

15. A program for causing a computer of a base station apparatus to:
form a plurality of beams;
receive, from a terminal apparatus, message 1 of a 4-step random access procedure transmitted using information of a first beam among the plurality of beams;
transmit message 2 of the random access procedure using the first beam in response to the message 1;
receive message 3 of the random access procedure that is transmitted from the terminal apparatus in response to the message 2 and includes information of a second beam as a beam serving as a candidate for switching from the first beam; and
transmit message 4 of the random access procedure using one of the first beam and the second beam in response to the message 3.
